# EUROPEAN PATENT SPECIFICATION

(11) **EP 3 143 311 B1**
(45) Date of publication and mention of the grant of the patent: **13.12.2017**
(21) Application number: 14724471.9
(22) Date of filing: 16.05.2014
(51) Int. Cl.: F16H 61/30, F16H 63/38

(54) **A GEAR SHIFT SYSTEM**
GANGSCHALTSYSTEM
SYSTÈME DE CHANGEMENT DE RAPPORT

(43) Date of publication of application: 22.03.2017
(73) Proprietor: Kongsberg Automotive As, 3601 Kongsberg (NO)
(72) Inventor: NORHEIM, Daniel, 3612 Kongsberg (NO)
(74) Representative: Uexküll & Stolberg
(86) International application number: PCT/EP2014/060155
(87) International publication number: WO 2015/172852

(56) References cited:
- EP-A1- 1 975 472
- WO-A1-2006/022577
- DE-A1- 19 839 850
- DE-A1-102008 043 894
- DE-B- 1 131 522
- DE-T5-112007 000 784
- US-A- 3 053 102
- US-A- 4 287 784

## Description

The present invention is directed to a gear shift system comprising:
- a gearbox having a shift shaft to which a shift actuation lever is connected,
- a shift lever remote from gearbox,
- a transmission mechanism for transferring shift commands from the shift lever to the shift shaft including a cable or rod connected with one of its ends to the shift lever and with its other end to a linkage comprising at least two actuating members including an input actuating member which is moved in response to shift lever movements transmitted by the cable or rod, and the shift actuation lever, wherein between input actuating member and shift actuation lever there is a connection with limited play which allows a limited shift in the relative positioning of the input actuating member and the shift actuation lever,
- a servo mechanism connected to the shift shaft to assist in turning the shift shaft,
- a servo valve arrangement for controlling the servo mechanism responsive to the relative positioning between the position of the input actuating member and position of the shift actuation lever dictated by the input actuating member, and
- a detent mechanism including a detent plunger and a detent track for providing a perceptible feedback of a shift operation to the shift lever.

Such a gear shift system is for example known from EP 1 975 472 A1 and EP 2 140 176 B1. The gear shift system comprises a shift lever to which a shift cable is connected which transmits shift lever movements to an input actuating member which is part of a transmission mechanism for transferring shift commands from the shift lever to the shift shaft. The input actuating member is in this case a valve control lever which is rotatably connected to a shift actuation lever which is fixed to the shift shaft and extends perpendicular therefrom. A servo cylinder is controlled by a servo valve arrangement and coupled to the shift actuation lever so that it can assist in turning the shift shaft around its longitudinal axis. The valve control lever comprises an annular portion with an opening through which the shift shaft extends with limited play. The rotatable connection of the valve control lever to the shift actuation lever is disposed such that the axis of rotation of this connection is parallel to the longitudinal axis of the shift shaft but at a distance to the longitudinal axis of the shift shaft. The servo valve arrangement comprises two opposing servo valves with spring biased plungers which abut against opposite outer surface portions of the annular portion of the valve control lever. The connection between the valve control arm and the shift actuation lever is a connection with limited play, since the valve control arm may rotate with respect to the shift actuation lever but this rotation is limited by the shift shaft which extends through the annular end portion of the valve control arm and thus limits the rotational moving range. Such limited play connection also in principle allows for a purely mechanical actuation of the shift shaft in case of a servo failure, since after the limited shift is used up manual force is transferred through the transmission mechanism to the shift actuation lever which then turns the shift shaft.

If the valve control lever is pivoted by a longitudinal displacement of the shift cable caused by a shift lever movement, the valve control lever on the one hand transfers torque to the shift actuation lever, on the other hand the valve control arm is rotated around its rotatable connection to the shift actuation lever which causes a displacement of its annular portion. This shift in the relative positioning is controlling the servo mechanism since the rotation of the valve control arm and the corresponding displacement of its annular end portion lead to a displacement of the plunger of the servo valve arrangement which in turn activate the servo cylinder which then exerts a torque on the shift shaft by exerting a force on the shift actuation lever to perform the desired shift movement of the shift shaft. A detent mechanism comprising a spring biased detent plunger and a cooperating detent track is acting between the valve control lever and a part fixed with respect to the gearbox housing. The detent track is formed on one end portion of the valve control lever and comprises three valleys corresponding to the two shifted positions and the neutral position in the middle. When the valve control lever reaches a position such that the detent plunger reaches one of the valleys this provides a feedback through the cable which is connected to the valve control lever and eventually to the shift lever such that the operator gets a feedback for the shift command. However, the detent mechanism is acting between the input actuating member (in this case the valve control lever) and a stationary component in the housing so that the operator only gets a feedback that the input actuating member of the transmission mechanism has reached the position dictated by the shift lever. In this manner it is not guaranteed that the shift shaft itself indeed reached its desired shifted position. Therefore, the shift feedback feeling for the operator does not provide a reliable indication that the shift command has indeed been successfully executed.

A further disadvantage is that the valleys of the detent track have to have in each case a relatively broad or extensive minimum, because it may be necessary to adapt the relative positioning of the transmission mechanism to the actual rotational positioning of the shift shaft when the transmission mechanism is mounted to the gearbox. Since the detent track does not follow such an adapting rotational movement of the transmission mechanism, but remains stationary, whereas the detent plunger follows the movement of the transmission mechanism, such adaption to the actual rotational position of the shift shaft is accompanied by a movement of the detent plunger along the minimum of the central valley. Therefore, the minimum has to have a certain extension to permit such adaption. Therefore moving the detent plunger eventually out of the central valley of the detent track does not give a well-pointed, perceptible feedback when the driver actuates the shift lever, but rather gives a feeling of free play or a slack in the transmission of the gear shift command.

DE 198 39 850 B4 describes a gear shift system having a shift lever and a gearbox including a shift shaft. There is a transmission mechanism for transferring shift commands from the shift lever to the shift shaft. A servo mechanism has a servo cylinder with a piston rod connected to a shift actuating lever for assisting in turning the shift shaft around its longitudinal direction. A control rod extends coaxially through the piston rod and into the servo cylinder for controlling its operation.

There is an input lever which is connected to a shaft for turning the shaft in response to a force from the shift lever to the input lever. The shaft is received in a coaxial hollow shaft. The shaft may rotate around its longitudinal axis within the hollow shaft but this rotational moveability is limited, for example by a radial pin which extends into a slot of a certain width so that the distance the pin may travel along the width of the slot determines the rotational play or limited movement range between the shaft and the hollow shaft. The shaft is connected by a lever to the control rod. In this manner a shift lever movement is transferred via the input lever to a rotational movement of the shaft (with the hollow shaft still at rest because of the limited rotational play of the shaft within the hollow shaft) and by the lever connected to the shaft to a movement of the control rod of the servo cylinder which in turn is activated to support the shift movement of the shift shaft initiated by the movement of the input lever. The servo cylinder is acting on a lever connected to the hollow shaft so that after the input lever started to turn the shaft within the hollow shaft which activated the servo cylinder, by the time the limited play of the shaft within the hollow shaft was used up, the servo cylinder supports the rotation of the hollow shaft to achieve the desired shift movement of the transmission. The hollow shaft plays the role of the shift shaft. Also in this limited play connection it is in principle possible, in case of a servo failure, to effect the shifting by manual force which is achieved by first turning the shaft via a cable connected to it via the input lever until the limited play of rotation between shaft and surrounding hollow shaft is used up, whereafter further manual force is transmitted from the shaft to the hollow shaft which is, if sufficient manual force is exerted, thereby turned to achieve the desired shifting.

There is a detent mechanism including a spring biased detent plunger which is fixed with respect to the housing of the gear shift system. A detent track is provided on the outer surface of the servo cylinder. The detent track has three valleys corresponding to the shifted positions and the neutral position of the shift shaft. This detent mechanism provides a feedback of the shift movement of the servo cylinder, which feedback is indirectly transferred back to the shift lever via the control rod and the input actuating member. However, there is no direct feedback whether the shift shaft reached the position that is determined by the position of the input actuating member controlled by the shift lever.

In addition, this system suffers from the same drawbacks as described above, namely that when mounting the transmission mechanism with its housing to the gearbox and when adapting it to the actual rotational position of the shift shaft, the detent track and the detent plunger have to move with respect to each other so that the minimum of each valley of the detent track has to be rather extensive to allow such movement. Again, this results in a rather imprecise feedback feeling since the detent valleys cannot be well pointed with a minimum which results in a feeling of free play or slack in the transmission.

Finally, the operation of mounting the transmission mechanism to the gearbox is rather complicated when the positioning has to be adapted to the actual rotational position of the shift shaft which may vary from gearbox to gearbox.

US patent 4,287,784 describes a gear changing system in which the shift lever is directly connected to an input actuating lever which is connected to the shift shaft via a splines connection which allows limited rotational play of the input actuating lever with respect to the shift shaft. A servo cylinder is acting on a servo actuation lever fixed to the shift shaft. If the input actuating lever is turned by a shift movement of the shift lever the input actuating lever is slightly rotated with respect to the shift shaft until the limited play is used up which relative to the movement of the input actuation lever activates the servo cylinder to act on the shift actuation lever. A spring biased detent plunger is disposed in the input actuating lever and is pressed into a valley of the shift shaft. This detent plunger has the function to bias the input actuation lever with respect to the shift shaft to assume a centered positioning of the splines connection between the input actuation lever and the shift shaft. After the operation of the servo cylinder has been initiated the detent mechanism causes the play in the splines connection between the input actuation lever and the shift shaft to increase again to assume a neutral centered position. However, this detent mechanism returning to its valley during operation of the servo cylinder does not provide a perceptible feedback of the actual shift operation has been completed.

The transmission transferring movements of the servo control valves to a relative movement between detent plunger and detent track has a transmission ratio of about 0,2 (1:5) in this prior art system. This means that for a typical servo valve movement of 1,5 mm to start to open and 3 mm to reach a fully opened state, this allows only for 0,3 to 0,6 mm movement between the detent plunger and the track. In practical terms this only allows for a detent mechanism with a force that centralizes the two moving detent parts as the detent plunger cone moves partly in and out of the tapered hole of the detent track, but it does not allow for a detent track with a valley and a biased plunger that can leave the valley to move along side regions adjoining the valley.

It is an object of the present invention to provide a gear shift system that provides a reliable feedback to the shift lever that a shift command has resulted in the desired shift state of the shift shaft, which feedback feeling should be free of any slack feeling due to not fully matched positioning of the detent mechanism with respect to the actual rotational position of the shift actuation lever, and that allows an easier assembly at the gearbox while the detent mechanism is kept in its fully centered state also during mounting when the position is adapted to the actual rotational position of the shift shaft.

This object is achieved by a gear shift system comprising the features of claim 1. Preferred embodiments of the invention are set out in the dependent claims.

According to the present invention the detent mechanism is arranged such that it is acting between (i) the input actuating member or a component that is linked to the input actuating member such that it follows its movements, and (ii) the shift actuation lever or a component that is linked to the shift actuation lever such that it follows its turning movements, so that the detent plunger reaching a central valley of the detent track indicates that the shift shaft has reached its neutral or in-gear position dictated by the input actuating member. In this manner it is ensured that the feedback of the detent plunger engaging a central valley in the detent track, which feedback is returned via the input actuating member to the shift lever, is indicative of the proper execution of the shift command to the shift shaft, i.e. the detent mechanism is indicative of the shift shaft rotational shift state to be consistent with the shift state dictated by the position of the input actuating member.

In such an arrangement a detent track having a single central valley is sufficient since the detent mechanism is giving an indication whether the shift shaft reached the position dictated by the input actuating member which is a single bit information. In other words, the detent mechanism indicates, when the detent plunger reaches the central valley of the detent track, that the shift shaft reached its rotational shift position that is dictated by the shift actuating member, regardless whether this dictated position is the neutral position, the forward shifted position or the backward shifted position. In the prior art one of the detent plunger or detent track was stationary with respect to the gearbox housing, and therefore there were always three valleys in the detent track, each valley corresponding to one of the shift states of the shift shaft, i.e. the neutral position, the shifted forward position or the shifted backward position of the shift shaft.

In addition, the three valleys of the detent tracks of the prior art had to be provided with quite extensive minima since the detent plunger and the detent track would have to be moved with respect to each other when the transmission mechanism is slightly rotated relative to the shift shaft in order to adapt to the actual rotational position of the shift shaft when the mechanism is mounted to the gear box, i.e. the detent plunger would have to move along the minimum of the valley while this adapting movement is performed. Accordingly, the feedback provided by such detent mechanism did not give a precise, sharp feeling but rather a slack feeling.

The wording "the input actuating member or a component that is linked to the input actuating member such that it follows its movements" is intended to mean that there is no free play which would allow for a permanent shift between the input actuating member and a component that is linked to it so that the movements of the component linked to the input actuating member follows any movement of the input actuating member. Likewise, the wording "the shift actuation lever or a component that is linked to the shift actuation lever such that it follows its turning movements" is intended to mean that, in case there is a connection to a component linked to the shift actuation lever, there is no free play allowing for a permanent shift between the shift actuation lever and the component linked thereto so that any movement of the shift actuation lever results in a proportional movement of the component linked thereto.

It should be noted that the gear shift system according to the present invention allows, besides the servo assisted shifting operation, under certain circumstances also for a direct mechanical force transfer between the shift lever and the shift shaft to effect a shift movement thereof. This is the case when the force to turn the shift shaft is very low and below the force that would be required to move the detent plunger out of the central valley of the detent track, for example when the synchronization forces of the gearbox are very low so that the force can be transferred through the detent mechanism without the detent plunger being disengaged from the central valley. In such case the force is transferred from the input lever through the linkage including the detent mechanism to the shift shaft to turn it. This operation mode will in the following be referred to as "scenario II", whereas the operation with servo assistance in which the detent mechanism is disengaged because the force exerted is large enough so that the force transferred through the detent mechanism is higher than the force needed for the detent plunger to leave the central valley to cause the actuation of the servo cylinder, will be referred to operation "scenario I". However, first mentioned operation according to scenario II is under practical circumstances rarely realized.

It should also be noted that the operation scenario II of the gear shift system of the present invention offers a further advantage over the prior art. In this case the operator has to exert the force only which is necessary to turn the shift shaft but no force to move the detent plunger along the detent track with accompanying compression of the bias spring. In contrast, in the prior art where the detent track was fixed with respect to the housing and had three adjacent detent valleys, in each case of a shift movement the detent plunger had to be moved from one detent valley to an adjacent one, with the accompanying compression of its bias spring. No such force is needed in the gear shift system of the present invention when it operates according to scenario II.

In a preferred embodiment the components of the transmission mechanism including the detent mechanism and the remaining components up to the shift shaft are moveably disposed in a housing which is to be connected to a gearbox housing such that the positioning of said components may be adapted to the rotational positioning of the shift shaft while keeping the detent mechanism in its centered position with the detent plunger disposed in the central valley of the detent track. The shift actuation lever may for example comprise a hub at one of its ends having a recess complementary to the end portion of the shift shaft such that the hub may be pushed onto the shift shaft, wherein there is a splines connection between the hub and the shift shaft to fix them rotationally to each other. The shift actuation lever is connected to the remaining components of the transmission mechanism which are moveably disposed in the housing. The servo cylinder may also be already preinstalled with its piston rod connected to the transmission mechanism. The positioning of the housing on the gearbox housing is fixed by the holes in the housings into which connecting elements like bolts are installed. The rotational positioning of the shift shaft may vary from gearbox to gearbox. With the present invention the hub to be connected to the end portion of the shift shaft may be rotated to be adapted to the positioning of the shift shaft which is accompanied by movements of the transmission mechanism in the housing. It is, however, very important for the present invention that during this adapting movement of the transmission mechanism the detent mechanism is moved as a whole (the forces that are moving the transmission mechanism during its adaption to the shift shaft position are too low to move the detent plunger out of the central valley of the detent track) so that the detent mechanism during the adaption of the transmission mechanism stays in its exactly centered rest position. In the prior the adapting movement to align the transmission mechanism to the rotational positioning of the shift shaft was in contrast accompanied by a relative movement of the detent plunger with respect to detent track which was fixed with respect to the gearbox housing. For this reason the valleys of the detent tracks of the prior art had to be provided with quite extensive minima since the detent plunger and the detent track would have to be moved with respect to each other when the transmission mechanism is slightly moved relative to the shift shaft in order to adapt to the actual rotational position of the shift shaft when the mechanism is mounted to the gear box, i.e. the detent plunger would have to move along the minimum of the valley while this adapting movement is performed.

This adapting of the transmission mechanism also allows for a much simpler assembly process when the housing is mounted to the gearbox while the positioning of the transmission mechanism may still be adapted to the actual rotational position of the shift actuation lever (and thereby of the shift shaft) while keeping the detent mechanism in its centered state during this procedure. This means that the shift lever, the housing of the transmission mechanism to be connected to the gearbox and the shift shaft at the gearbox each have predetermined positions and that the components of the transmission mechanism can be connected to the shift actuation lever of the shift shaft while maintaining i) the valve arrangement in an inactivated state and ii) the detent plunger in the central valley of the detent track, wherein the total length of the cable or rod connected to the shift lever is defined by the relative position between the shift lever and the shift shaft.

In a preferred embodiment the system is arranged such that the inactivated state of the servo valve arrangement is identical for a plurality of positions of the input lever and the shift actuation lever when the detent plunger is in the central valley of the detent track. Thus, the positioning of the moveable components of the transmission mechanism representing engaged positions (i.e. neutral or in gear) of the transmission mechanism as described herein is not determined by a relative position with respect to the housing thereof but only relative to the shift shaft after the transmission mechanism has been firmly installed to the shift shaft and the gearbox.

In a preferred embodiment the detent track consists of a single central valley surrounded by side regions of lower curvature than the central valley. This allows arranging the central valley such that it is a well-pointed valley which gives a sharp and precise feedback feeling at the very moment when the detent plunger reaches or leaves the central valley.

Preferably, the central valley of the detent track is of complementary shape to the tip of the detent plunger so that the tip of the detent plunger is received in the central valley without play, i.e. there is no extensive minimum in the central valley through which the detent plunger could move before starting to leave the central valley against the force of the spring but the detent plunger is immediately moved against its spring force when it starts to move along the detent track which provides for a sharp and positionally well-pointed feedback feeling.

In a preferred embodiment the side regions of the detent track are shaped with such a low curvature that the spring biased detent plunger does not move against the spring bias when the detent plunger is moved along the side regions of the detent track, or moves substantially less then upon leaving or entering the central valley of the detent track. This provides for a sharp and pointed feedback feeling when the detent plunger reaches or leaves the central valley, without any feeling of a slack connection when the gear shift lever is moved to a target position.

In a preferred embodiment the detent mechanism is arranged such that the transmission ratio between a movement of the servo valve arrangement to the movement of the detent plunger with respect to the detent track is in the range between 1,25 and 2. In typical cases a movement distance between 1,5 mm and 3 mm is needed in the servo valve arrangement to come from a closed to a fully opened state of a valve. According to this embodiment this movement is translated into a movement of the detent plunger with respect to the detent track in the range of 1,875 and 6 mm. This movement distance in this range is sufficiently large so that the detent track may be shaped with a well-pointed central valley surrounded by more or less flat side regions.

According to a preferred embodiment the servo mechanism includes a valve control lever which is also part of the transmission mechanism, and two opposing servo valves, wherein the valve control lever has an annular portion with an opening in which a shaft is received with limited play allowing displacement of the annular portion with respect to the shaft. The valve actuation lever is rotatably connected to the shift actuation lever or a component that is linked to the shift actuation lever such that it follows its turning movements, or to the input actuating member or a component that is linked to the input actuating member such that it follows its movements. This rotatable connection defines an axis of rotation parallel to but displaced from the longitudinal axis of the shaft received in its annular portion such that rotations of the valve control lever caused by the transmission mechanism cause pivotal displacements of its annular portion. Two opposing servo valves abut against opposite surface portions of the annular portion of the valve control lever with spring biased plungers such that a displacement of its annular portion due to a rotational movement of the valve control lever causes displacement of the plungers of the servo valves which in turn actuate the servo mechanism by operating a servo cylinder which acts on the shift shaft, e.g. by exerting a torque by acting on the shift actuation lever extending from the shift shaft in lateral direction, to support the turning of the shift shaft to its desired rotated shift position.

In a preferred embodiment of such gear shift system the input actuation member is identical to the valve control lever to which, at a distance to its axis of rotation with respect to the shift actuation lever or the component that is linked to the shift actuation lever such that it follows its turning movements, a component of the transmission mechanism is connected that is capable of transferring force from the shift lever to the valve control lever to turn it. Since the rotational connection between the valve control lever and the shift actuation lever is disposed spaced apart from the longitudinal rotational axis of the shift shaft, force exerted by the transmission mechanism on the valve control lever results in a torque exerted via the shift actuation lever on the shift shaft such that the shift command transferred by the transmission mechanism including the input actuation member on the valve control arm is also mechanically transferred to the shift actuation lever and thus to the shift shaft; therefore, the shift shaft could also be rotated by this mechanical torque transmission from the transition mechanism to the shift shaft such that shift commands can in principle also be executed manually in case of a failure in the servo mechanism.

Preferably the valve control lever is rotatably connected to the shift actuation lever at a distance to its annular portion such that rotations of the valve control lever caused by the transmission mechanism cause pivotal displacements of its annular portion to actuate the servo mechanism. On the other hand since the valve control lever is rotatably connected to the shift actuation lever at a distance to the longitudinal axis of rotation of the shift shaft, as described above, force exerted by the shift lever via the cable or linkage on the valve control arm also results in a mechanical transmission of torque on the shift shaft to contribute to the shift force to accomplish the shift movement of the shift shaft. This arrangement corresponds to the gear shift system of EP 2 140 176 B1 described above, except for the arrangement of the detent mechanism to be indicative for the relative positioning between the valve control lever and the shift actuation lever.

In an alternative embodiment the input actuation member is a pivotable input actuation arm connected to an actuation shaft that is rotatable around its longitudinal axis, which longitudinal axis is disposed perpendicular to the longitudinal axis of the shift shaft. A further actuation transfer arm is connected to the actuation shaft, wherein this actuation shaft is the shaft which extends through the opening of the annular portion of the valve control lever. The valve control lever is rotatably connected to the actuation transfer arm at a distance from the longitudinal axis of the actuation shaft. An end portion of the valve control lever opposite to the annular portion is coupled to the shit actuation lever such that the valve control lever follows the turning movement of the shift actuation lever. In this way the valve control lever follows the shift movement of the shift shaft and is thus indicative of the shift positioning of the shift shaft. In this case the detent mechanism can be acting between the valve control lever (coupled to the shift shaft) and the actuation shaft (coupled to the input actuation member) so that as a result the detent mechanism reaching its central valley indicates that the shift shaft reached its shift position dictated by the input actuation member.

In the following the invention is described with reference to preferred embodiments in the drawings in which:
Fig. 1 shows a perspective view of components of a first embodiment of a gear shift system;
Figs. 2 to 5 show a sequence of plan views of the first embodiment in subsequent stages during a shift operation;
Fig. 6 shows a cross-sectional view of components of a gear shift system according to a second embodiment;
Figs. 7 to 10 show a sequence of partly cross-sectional views taken at a plane perpendicular to shaft 36 of Fig. 6 in the area of the detent mechanism and showing the second embodiment in subsequent stages during a shift operation;
Fig. 11 shows a schematical cross-sectional view of components of a gear shift system according to a third embodiment;
Fig. 12 shows a schematical cross-sectional view of a detail along plane A-A of Fig. 11; and
Fig. 13 shows a schematical perspective view of the third embodiment.

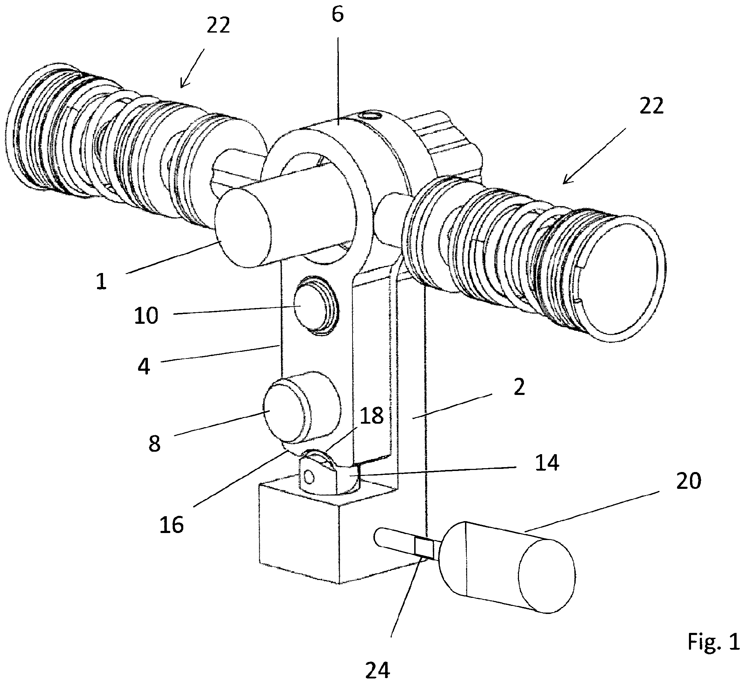

The invention will now first be described with reference to a first embodiment shown in Figs. 1 to 5. The gear shift system comprises a shift lever (not shown) which is connected with its lower end to a cable or rod (not shown) so that shift lever shift commands are translated into longitudinal displacements of the cable or rod connected to the shift shaft. With its other end the cable or rod is connected to an input actuating member of the transmission mechanism, in this case to a valve control lever 4. The valve lever 4 comprises a stud 8 at one of its ends to which the cable or rod is connected so that shift lever commands are transmitted to the valve control lever 4.

Opposite to the stud 8 valve control lever 4 is provided with an annular portion 6 defining an opening. This opening receives an end portion of a shift shaft 1 of the gear shift system, wherein the outer diameter of the end portion of the shift shaft 1 is smaller than the inner diameter of the opening in the annular portion 6 of the valve control lever 4. Of course, it is of no relevance what kind of shaft is received in the annular portion 6 of the valve control lever 4, as long as such shaft does not move in directions perpendicular to its longitudinal axis. Such a further shaft which is received in the annular portion 6 could also be a further shaft coaxial with the shift shaft and attached to the housing.

There is further provided a servo cylinder 20 which is linked by a piston rod 24 of the servo cylinder 20 to a shift actuation lever 2, wherein the servo cylinder is acting on the shift actuation lever 2 at a distance to the rotational axis of the shift shaft 1 so that the servo cylinder 20 may exert torque on the shift shaft 1. The shift actuation lever 2 is rotationally fixed to the shift shaft 1, for example by a splines connection, so that any turning movement of the shift actuation lever 2 is translated into a rotational movement of the shift shaft 1.

When in the following the operation of the gear shift system is described with reference to the embodiments shown in the drawings it will always be assumed that the gear shift system is operating under conditions referred to as "scenario I" above. This means that the force needed to turn the shift shaft requires a force to be transmitted through the transmission mechanism including the detent mechanism which causes the detent plunger to leave the central valley of the detent track against the spring bias force. The reason for describing this way of operation is that only in this case the servo mechanism will be activated.

The valve control lever 4 is coupled to the shift actuation lever 2 by a connecting pin 10 which is fixed to the shift actuation lever 2. The connecting pin 10 is received in a complementary bore in the valve control lever 4 such that a rotatable connection of the valve control lever 4 to the shift actuation lever 2 is established, wherein the axis of rotation coincides with the central axis of the connecting pin 10. This rotational axis of the connection of the valve control lever 4 to the shift actuation lever 2 is parallel to, but displaced from the rotational axis of the shift shaft 1. Furthermore, the stud 8 to which a cable or rod coming from the shift lever is connected, is likewise spaced apart from the rotational axis of the connection of the valve control lever 4 established by the connecting pin 10, so that a shift command transmitted as a longitudinal displacement of the cable or rod connected to the stud 8 exerts a torque on the valve control lever 4 around the axis of rotation of the connection established by the connecting pin 10. This also implies a torque exerted on the shift actuation lever 2 since the connecting pin 10 is also spaced apart from the axis of rotation of the shift shaft 1. However, in a first phase a force exerted on the stud 8 of the valve control lever will not lead to a torque on the shift actuation lever 2 which is sufficient to turn this shift actuation lever 2. Rather in the initial phase of a shift operation the valve control lever 4 is pivoting about the axis of rotation established by the connecting pin 10 with respect to the shift actuation lever 2. Since this rotation has an axis of rotation which is spaced apart from the annular portion 6 of the valve control lever, the annular portion 6 is pivoting about the axis of rotation around the connecting pin 10 which leads to a displacement of the annular portion 6 with respect to the shift shaft 1 received in its opening. Two opposite servo control valves 22 are in abutment against outer surface portions of the annular portion 6 of the valve control lever 4. Therefore, a rotation of the valve control lever 4 caused by a pulling/pushing force on its stud 8 will lead to a pivotal movement of the annular portion 6 which is pivoted when the valve control lever 4 is rotated around the connecting pin 10. This causes a displacement of the plungers of the servo control valves 22 which in turn opens one of the servo control valves. This actuates the servo cylinder 20 to exert force on the shift actuation lever 2 in the desired direction in order to rotate the shift shaft 1 to the desired shift position. The mechanism so far described is similar to the one described in above-mentioned document EP 2 140 176 B1 which is referred to here for further description of the mechanism.

An essential difference between the known gear shift system from EP 2 140 176 B1 and the first embodiment described here is the detent mechanism which is intended to give a perceptible feedback produced by an engagement or disengagement of the detent mechanism to give a feedback of the execution of the shift command. This detent mechanism was acting in the system of EP 2 140 176 B1 between the valve control lever and a detent track positioned fixed with respect to the gearbox. In contrast the present invention requires that the detent mechanism is acting between an input actuating member (the valve control lever 4 in this example) and the shift actuation lever 2 which is rotationally linked to the shift shaft 1 so that the engagement of the detent mechanism gives an indication that the shift actuation lever 2 (and therefore the shift shaft 1 to which it is rotationally fixed) reached the position dictated by the input actuating member, in this case valve control lever 4.

In this embodiment the detent mechanism comprises a spring biased detent plunger 14 connected to an angled extension of the shift actuation lever 2. The spring bias urges the detent plunger 14 upwardly against a detent track 16 provided on a lower surface of the valve control lever 4. Detent track 16 consist of a single central valley 18, and essentially flat portions on both sides thereof. The detent plunger 14 returns to the central valley 18 in the detent track 16 with a perceptible engagement when the shift actuation lever 2 reaches the shift position dictated by the input actuating member, in this case by the valve control arm 4.

Thus, the engagement of the detent mechanism indicates that a consistent positioning of the shift actuation lever 2 with respect to the input actuating member, in this case valve control lever 4, has been reached and thus the engagement of the detent mechanism signals that the shift actuation lever 2 and therefore the shift shaft 1 indeed reached the desired rotated position. Therefore, the engagement of the detent mechanism provides a correct and direct feedback that the shift command has been correctly converted to a corresponding shift rotation of the shift shaft 1. Moreover, the detent mechanism adds stiffness to the system and reduces slack so as to prevent accidental gear changes, and reduces the need for precise tolerances for the correct alignment and installation of the transmission mechanism.

It should also be noted that with the present invention a detent track with a single central valley 18 is sufficient to provide a feedback that the shift shaft 1 reached the desired shift position (shifted forward, neutral, shifted backward) because the detent mechanism is indicative of the relative positioning between the input actuating member (the valve control lever 4 in this case) and the shift actuation lever 2, whereas this consistent relative positioning between the two components mentioned may be indicated by a detent mechanism including a detent track with a single central valley 18. Thus, it can be said that the detent mechanism is entirely force-dependent and not position-dependent with respect to any component that is fixed or stationary with respect to the gearbox (in other words the position independence implies that the whole detent mechanism may be moved with respect to the shift shaft). More specifically, the force dependence of the detent mechanism implies that the state of the detent mechanism, i.e. the position of the detent plunger with respect to the central valley, is only determined by the movement of components necessary to effect a turning movement of the shift shaft and the forces acting between these components. When neglecting over all component inertia and friction between components, these forces are primarily the ones acting on and acting between:
1.) the stud 8 via cable or rod linkage;
2.) the annular portion 6 of the control lever 4 via air and spring biased valve plungers of valve 22;
3.) the detent mechanism including the detent plunger being spring biased into the central recess;
4.) The shift actuation lever and shift shaft.

The connection between the valve control lever 4 and the shift actuation lever 2 is a connection with limited play since the valve control lever 4 may pivot with respect to the shift actuation lever 2 around the connection established by the connecting pin 10 to the extend allowed by the opening in the annular portion 6. With the present invention a perceptible feedback generated by the engagement of the detent mechanism is provided that a consistent positioning of the input actuating member, the valve control lever 4 in this case, and the shift actuation lever 2 has been achieved regardless of the limited play of the connection between these components.

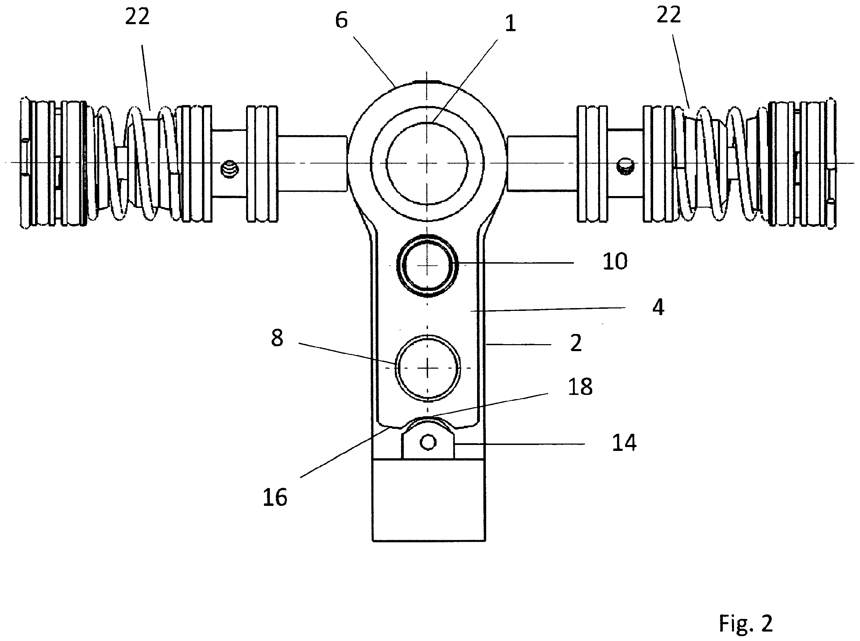

The operation of the first embodiment during a shift operation as outlined above will now be described with reference to Figs. 2 to 5 which show a sequence of movement stages during execution of a shift command. Figs. 2 to 5 show schematic front views of the first embodiment shown in a perspective view in Fig. 1.

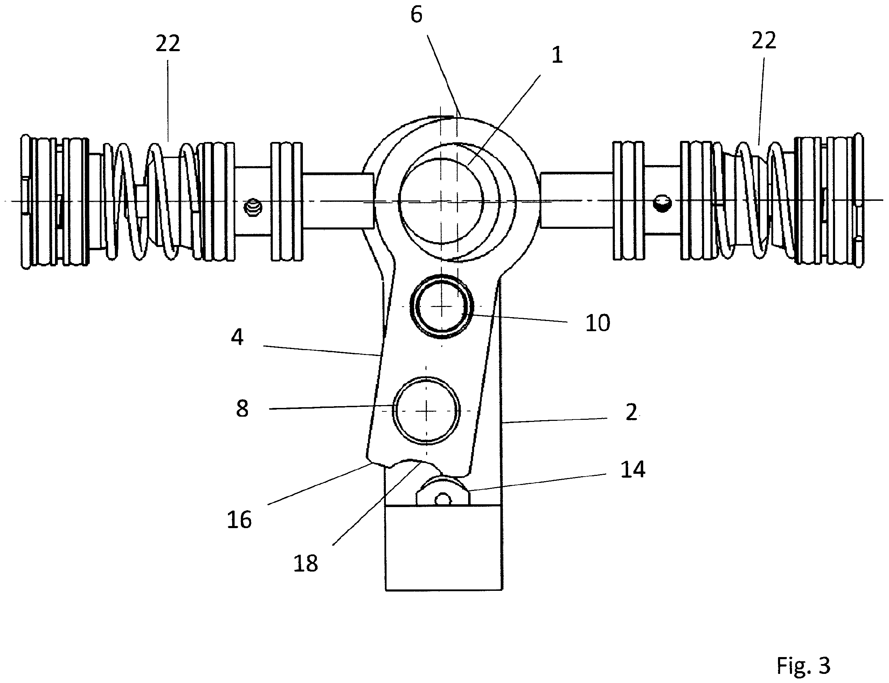

Fig. 2 shows the gear shift system in an initial state, namely the neutral position of the shift shaft, and therefore the corresponding neutral positions of the shift actuation lever 2 and the valve control lever 4 as input actuating member. More specifically, Fig. 2 shows the neutral, non-activated state of the valves 22. It should be apparent by now that due to the advantage of the present invention to have the detent mechanism centered in all three positions of the shift shaft, Fig. 2 could be representing all these three positions of the shift shaft (in-gear forward, in-gear backward and neutral). For the sake of illustration and simplicity, however, it will be assumed that Fig. 2 represents the neutral state of the shift shaft. Thus, the shift lever is shifted which shift lever movement is transferred by a cable or rod connected to the stud 8 of the valve control lever 4. In this example a pulling force is exerted on the stud 8 acting in a direction to the left hand side in Figs. 2 to 5. Such actuation force causes a torque on the valve control lever 4 around the connecting pin 10 with respect to the shift actuation lever 2, which in turn causes a torque on the shift actuation lever 2, transferred through the connecting pin 10, around the rotational axis of the shift shaft 1. However, a high torque may be needed in order to turn the shift actuation lever 2 and thereby the shift shaft 1, (it is again noted that here and in the following description of the operation of the gear shift system, always operational conditions are assumed that were referred to above as scenario I which implies the operation of the servo cylinder). In an initial phase a torque exerted on the valve control lever 4 only causes a pivotable movement of the valve control lever 4 about the connecting pin 10, whereas the shift actuation lever 2 and the shift shaft 1 are still in the initial position. This situation is illustrated in Fig. 3 showing the shift actuation lever 2 still in its unmoved initial position, whereas valve control lever 4 has been pivoted about the connecting pin 10 with respect to the shift actuation lever 2 by the pulling force on its stud 8. Since the annular portion 6 of the valve control lever 4 is spaced apart from the axis of rotation established by the connecting pin 10 such pivotal movement of the valve control lever 4 leads to a displacement of the annular portion 6 with respect to the shift shaft 1 received in the opening in the annular portion 6. This displacement of the annular portion 6 is limited by the shift shaft extending through the opening in the annular portion 6 in the situation shown in Fig. 3.

It should be noted that in this pivoted position of the valve control arm 4 with the limited play with respect to the shift actuation lever 2 used up, there would be a direct force transferring connection between the valve control lever 4 and the shift actuation lever 2 since a further pivoting of the valve control lever 4 caused by further displacement of the stud 8 at its lower end is necessarily accompanied by a turning movement of the shift actuation lever 2 around the rotational axis of the shift shaft 1. Therefore, even in case the servo support should fail this limited play connection would still allow to manually shift the system if sufficient force is exerted via the shift lever and the cable or rod on the stud of the valve control lever 4.

In any case, as shown in Fig. 3 the pivotal displacement of the annular portion 6 of the valve control lever 4 has the effect that the spring biased plunger of one servo control valve 22 is displaced into the valve, whereas the plunger of the other servo control valve 22 has been moved further out of the valve. This has the effect that the servo control valve 22 into which the plunger has been pushed is opened, whereas the other servo valve 22 remains closed. The opening of the servo control valve 22 on the right hand side actuates the servo cylinder 20 (see Fig. 1) to act on the shift actuation lever 2 to provide additional torque on the shift actuation lever 2 to achieve the desired rotation of the shift shaft 1. In this embodiment the shift actuation lever and the servo is intended to be received in the same housing (not shown) of the transmission mechanism. As should be understood, however, the present invention is not limited to this and the servo may act on a different lever, e.g. at a position distant from the housing of the transmission mechanism (not shown) so as to turn the shift shaft 1.

As can also be seen in Fig. 3 the initial pivotal movement of the valve control lever 4 with respect to the shift actuation lever 2 which still remained unmoved in its initial position has the effect that the detent plunger 14 left the central valley 18 of the detent track 16 on the lower end of the valve control lever 4.

As can be seen the detent track 16 has a central valley 18 with a shape essentially complementary to the tip of the detent plunger 14. On both sides of the central valley 18 there are essentially flat side regions of the detent track 16 which do not cause any further displacement of the detent plunger 14 against its spring bias when it moves along the flat side regions. In other words the detent mechanism only causes a feedback feeling when the valve control lever 4 reaches or leaves its centered position were the detent plunger is received in the central valley of the detent track 16. In addition, since the distance of the detent track 16 from the turning point around pin 10 is about twice as large as the distance from the turning pin 10 to the center of the annular portion 6 which causes the servo valve plunger displacement, the transmission ratio between the servo plunger movement to the relative movement between detent plunger 14 and detent track 16 is about 2. With a typical displacement of 1,5 mm to 3 mm for a servo valve plunger to bring the servo valve to a fully opened state the corresponding movement range of the detent plunger 14 to the detent track 16 is about 3 mm to 6 mm. A corresponding extension of the detent track 16 allows the detent track to be shaped with a well-pointed central valley and adjacent essentially flat side regions which give the desired force characteristic with a central peak corresponding to the position when the detent plunger 14 exactly reaches the central valley 18.

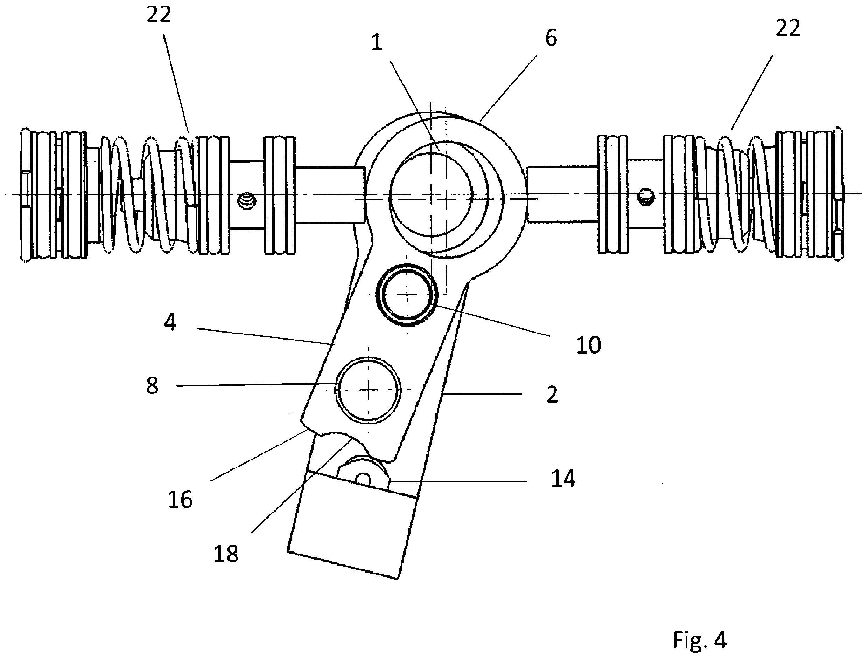

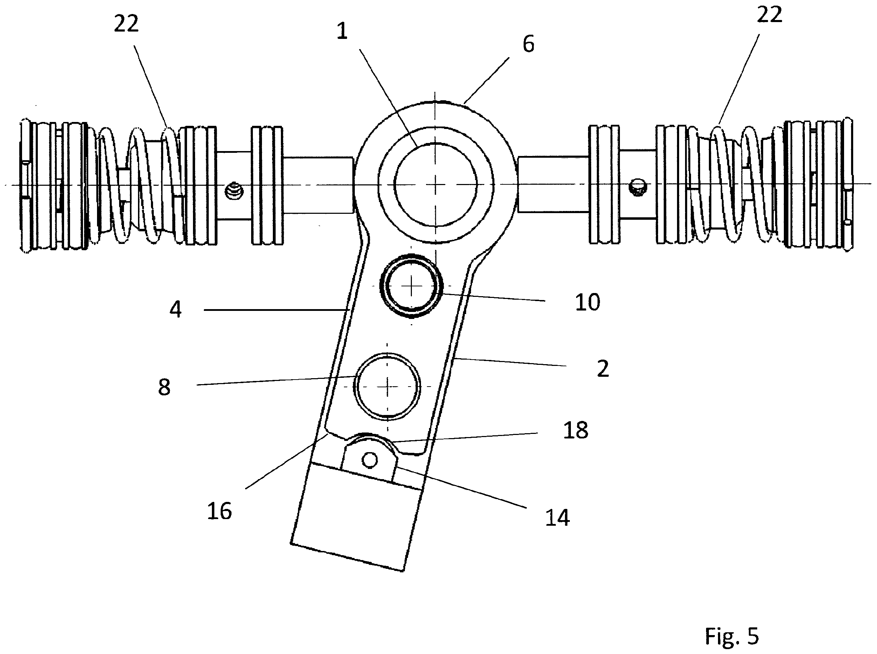

With the opening of servo valve 22 the servo cylinder acts on the shift actuation lever 2 and thereby turns the shift actuation lever 2 to follow the valve control lever 4. This situation is illustrated in Fig. 4. At the same time, the forces acting in the system trying to reach an equilibrium state or centered state, namely the forces exerted by the biased plungers of the valves 22 and the detent mechanism 18, 14, will further aid to reach a neutral or concentric position of the center axis of the annular portion 6 of the control lever 4 and the shift shaft 1 as shown in Fig. 5.

When the servo cylinder 20 has turned the shift actuation lever 2 to the desired turned position which corresponds to the desired rotated position of the shift shaft 1 and which corresponds to the position dictated by the input actuating member, in this case the valve control lever 4, the relative positioning between the valve control lever 4 and the shift actuation lever 2 is the same again as in the initial position 2. This also has the consequence that the detent mechanism reached its engaged position again when the shift actuation lever 2 reached the shifted position dictated by the input actuating member, in this case valve control lever 4, so that the completion of the actual shift command indicating that the shift actuation lever 2 and therefore the shift shaft 1 reached the desired turned position coincides with the engagement of the detent mechanism with the detent plunger 14 reaching the central valley 18 of the detent track 16 again. This shifted position is illustrated in Fig. 5.

It should also be noted that the spring forces of the servo control valves 22 and of the detent mechanism provides a bias on the limited play connection of the valve control lever 4 and the shift actuation lever 2 to bring the levers to a centered relative positioning in which the shift shaft 1 is centered within the opening of the annular portion 6 of the valve control lever 4.

The components shown in Fig. 1 (except the shift shaft) may be preassembled in a housing which is then to be fixed to the gearbox housing. The positioning of this housing on the gearbox housing is predetermined by holes in the housings which receive fastening elements. During the mounting process a hub at the end of the shift actuation lever having an opening complementary to the shift shaft is pushed onto the shift shaft, wherein shift shaft and hub include a splines connection so that they are rotationally fixed to each other. In the course of this mounting procedure it may be necessary to adapt the rotational position of the shift actuation lever to that of the shift shaft so that the splines connection is aligned. The other components linked to the shift actuation lever follow this movement. It is an important feature of the present invention that the detent mechanism as a whole also takes part in this movement but stays in its centered rest position because the forces involved to adapt the positioning are too low force the detent plunger out of the central valley of the detent track. In the prior art one part of the detent mechanism, for example the detent track, was fixed to the housing. In this case movements of the transmission mechanism to adapt it to the rotational position of the shift shaft were accompanied by a movement of the detent plunger which was therefore displaced with respect to the valley of the detent track. The stationary detent tracks therefore had to have extensive minima to allow such movements which created a feeling of free play or slack in the transmission.

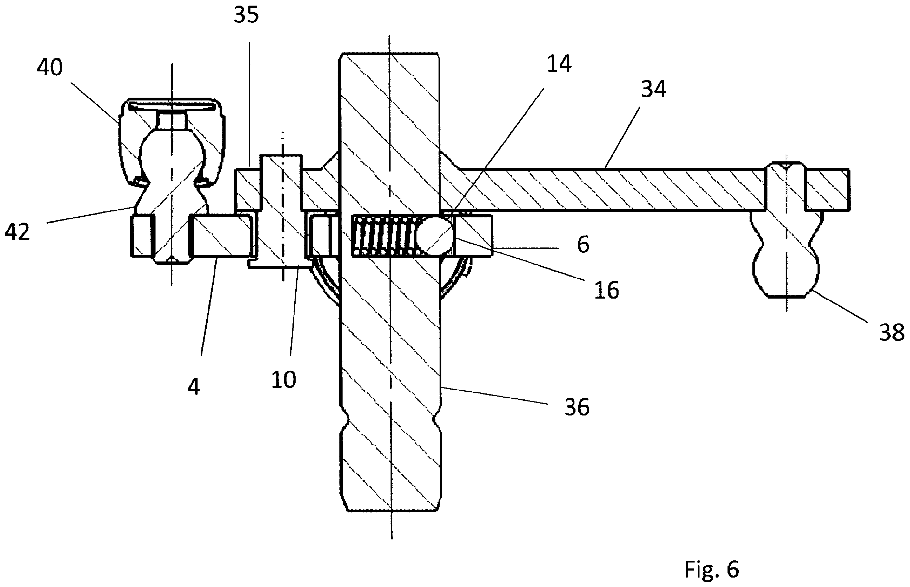

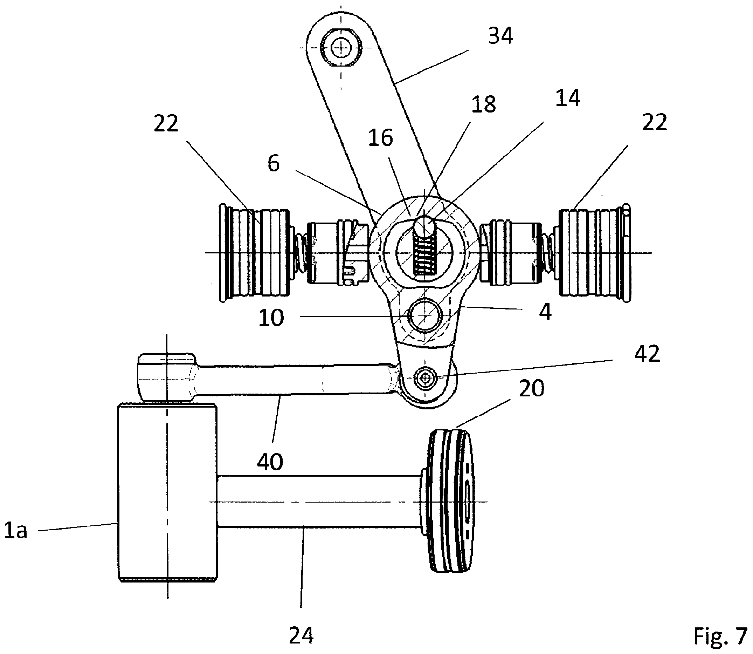

A second embodiment of a gear shift system according to the invention will now be described with reference to Figs. 6 to 10, wherein Fig. 6 shows a cross-sectional side view, and Figs. 7 to 10 show partly cross-sectional views taken at a plane perpendicular to the figure plane of Fig. 6 and the longitudinal axis of shaft 36 in the area of the detent mechanism. Figs. 7 to 10 show of the gear shift system in subsequent movement stages during a shift operation.

First the general design of the system will be described with reference to Figs. 6 and 7. The system comprises an input actuating member 34 in the form of a lever which carries a stud 38 at its outer end. The stud 38 is arranged to be connected to a cable or rod (not shown) connecting it to a gear shift lever (not shown). The input actuating member 34 is rotationally fixed to an actuating shaft 36 which may be supported in a bearing in the housing (not shown) of the transmission mechanism. The input actuating member 34 is rotationally fixed to this actuating shaft 36 such that the actuating shaft 36 follows any pivotal movement of the input actuating member 34 with a corresponding rotation around its longitudinal axis. Further there is an actuation transfer arm 35 which is likewise rotationally fixed to the actuating shaft 36 such that the actuation transfer arm 35 follows any pivotal movement of the input actuating member 34 transmitted via the actuation shaft 36. In the embodiment shown the actuation transfer arm 35 is an extension of the input actuating member 34 extending the input actuating member 34 to the opposite side of the actuating shaft 36. In principle, however, the actuation transfer arm could be a separate component which could be fixed to the actuating shaft 36 at an axial position displaced with the respect to the axial position of the input actuating member 34.

A valve control lever 4 is connected to the actuation transfer arm 35 by a connecting pin 10 which is received in a bore of the valve control lever 4 such that this valve control lever 4 is rotatable around the central axis of the connecting pin 10. The axis of rotation of this rotatable connection is parallel to, but displaced from the longitudinal axis of the actuating shaft 36. In this case this rotatable connection of the valve control lever 4 is a connection to the actuation transfer arm 35 which is a component linked to the input actuating member 34 such that it follows its movements.

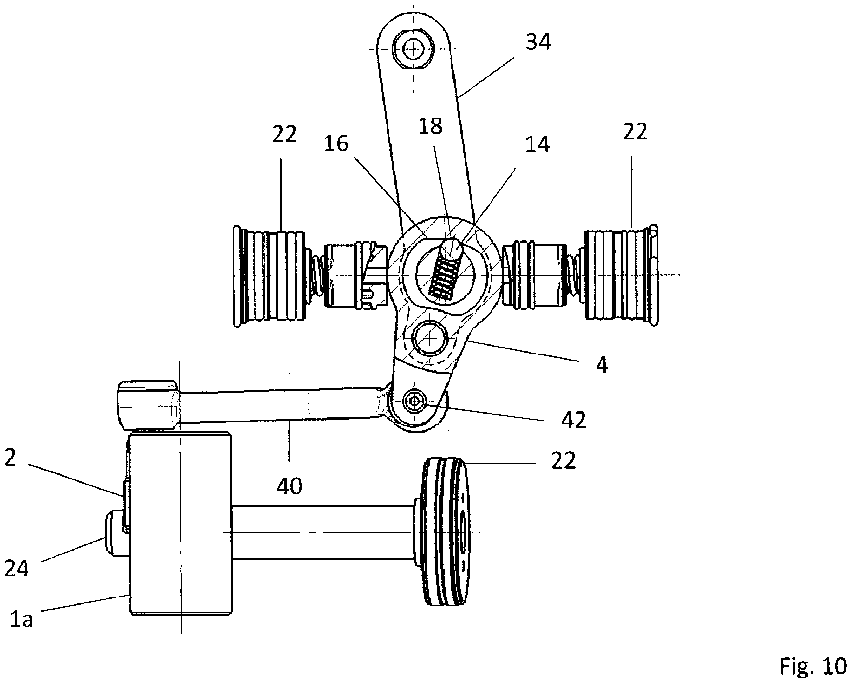

The control lever 4 has an annular end portion 6 having an opening through which actuating shaft 36 extends, wherein the inner diameter of the opening of the annular portion 6 is larger than the diameter of actuating shaft 36. The end of the valve control lever 4 opposite to its annular portion 6 carries a ball pin 42. To this ball pin 42 a connecting rod 40 is connected by a ball joint. The opposite end of the connecting rod 40 is rotatably connected to a shift actuation lever 2 at a distance to the longitudinal rotational axis of a shift shaft 1. In Figs. 7 to 10 the shift shaft 1 is not shown but a hollow hub or sleeve 1a. As has already been described above such hub or sleeve may be provided at one end of the shift actuation lever and may be provided with a cavity such that it may be pushed onto an end portion of the shift shaft 1. The hub 1a at the end of the shift shaft and the end portion of the shift shaft should be arranged to provide a splined connection as known by the skilled person. The splined connection is necessary to allow axial movement of the shift shaft 1 for select movements of the gearbox while at the same time providing a rotational coupling between the hub 1a of the shift actuation lever and the shift shaft 1. The longitudinal axis of rotation of which shift shaft 1 extends vertically in the Figure plane, i.e. along the central longitudinal axis of the shift actuation lever hub 1a. To this shift shaft 1 a shift actuation lever 2 is, via its hub 1a which receives the end portion of shift shaft 1 in a rotationally coupled manner, connected such that it extends into the figure plane of Fig. 7 below the shift shaft hub 1a and is thus not visible in this view. As can be seen in Fig. 10 which shows the situation when the shift actuation lever 2 has been turned to effect a shift operation a small part of the shift actuation lever 2 is then visible on the left hand side beside shift shaft hub 1a. As can also be seen from a comparison of Figs. 7 and 10 the connecting rod 40 followed this turning movement of the shift actuation lever 2 and transferred this movement to the valve control lever 4 via the ball joint and ball pin 42.

A piston rod 24 of a servo cylinder 20 is connected to the shit actuation lever 2 at a distance of the axis of rotation of the shift shaft 1 such that the servo cylinder 20 can exert a torque on the shift shaft 1 via the shift actuation lever 2.

In the following an overview over the operation of the system of the second embodiment will be given.

A shift operation is initiated by exerting a force by a cable or rod connected to the stud 38 on the input actuating member 34 in a direction essentially perpendicular to the elongation of the input actuating member 34. In this manner the input actuating member 34 is pivoted about the longitudinal axis of rotation of actuating shaft 36 which is rotated by the same angle as the angle through which the input actuating member 34 is pivoted. Thus, the actuating shaft 36 is a component that is linked to the input actuating member such that it follows its movements. To this actuating shaft 36 the actuation transfer arm 35 is rotationally fixed such that it is also a component that is linked to the input actuating member 34 such that it follows its movement. In the depicted embodiment the actuation transfer arm 35 is in fact in one piece extending opposite to the input actuating arm 34; in principle, however, it could also be a separate member that is separately rotationally fixed to the actuation shaft 36 in which case it would also be a component that is linked to the input actuating member 34 via the actuation shaft 36 such that it follows the movements of the input actuating member 34.

When the input actuating member 34 is turned for effecting a shift operation a torque is exerted on the valve control lever 4 via the actuation transfer arm 35 and the connecting pin 10 and detent mechanism 18, 14. Since the valve control lever 4 is connected to the shift actuation lever 2 by the connecting rod 40 this also generates a torque exerted on the shift actuation lever 2 via the connecting rod 40. However, when a high torque is needed in order to turn the shift actuation lever 2 the torque exerted via the valve control lever 4 and the connecting rod 40 to the shift actuation lever 2 is not sufficient so that the shift actuation lever 2 remains unmoved in its initial position. In this initial phase of turning of the input actuating member 34 the torque exerted on the valve control lever 4 leads to its rotation around the connecting pin 10 when the detent plunger start to move relatively to the central valley such that its annular portion 6 spaced apart from the axis of rotation about the connecting pin 10 is displaced by a pivotal movement of the annular portion 6. This causes a displacement of the plungers of the servo control valves 22. One of the plungers of the servo control valves 22 will be pushed into the valve by the displacement of the annular portion 6 and opens the valve in this manner. The opening of one of the servo control valves 22 actuates the servo cylinder 20 so that the shift actuation lever 2 is pivoted by the support of the servo cylinder 20 to rotate the shift shaft 1 to the desired shift position. The valve control lever 4 is forced to follow the movement of the shift actuation lever 2 since it is connected to it by the connecting rod 40.

The connection between the input actuating member 34 and the shift actuation lever 2 is a connection with limited play which is established by the rotatable connection of the valve control lever 4 to the actuation transfer arm 35. The rotational play is limited by the actuating shaft 36 which extends through the opening of the annular portion 6 of the valve control lever. When the input actuating member 34 is turned in the initial phase of a shift operation and the valve control arm 4 rotates around the connecting pin 10 against the resistance of the shift actuation lever and the shift shaft the play in the connection of the valve control lever 4 to the actuation transfer arm is used up, i.e. a portion of the inner wall defining the opening of the annular portion 6 is in abutment with a surface portion of the actuation shaft 36. At this stage there is a force transmitting connection between the input actuation member 34 and the shift actuation lever 2 since any further turning movement of the input actuating member 34 is transmitted through the actuation transfer arm 35, the valve control lever 4 and the connecting rod 40 to the shift actuation lever 2. In this manner it is in principle possible to effect the shift operation manually, when sufficient manual force is applied on the shift lever and transferred to the input actuating member 34 to turn the shift shaft 1, for example in case of a failure of the servo cylinder.

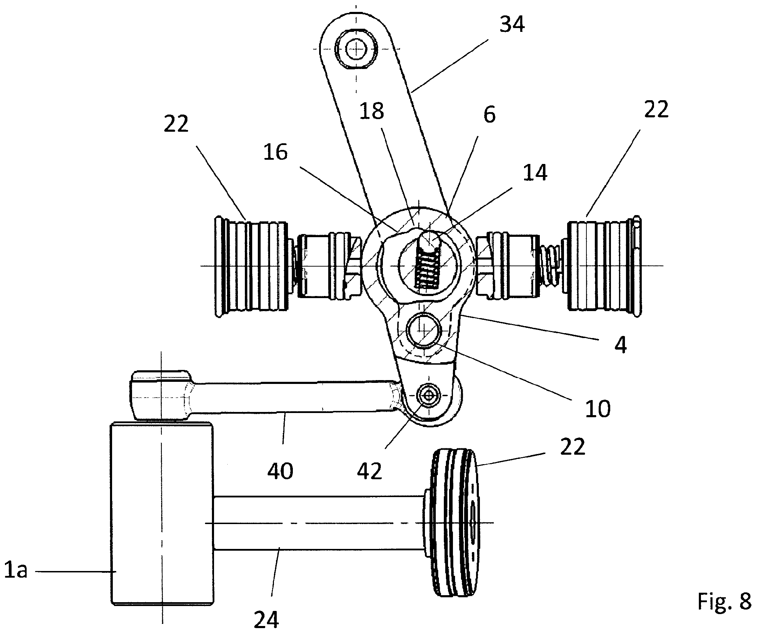

The detent mechanism comprises a plunger 14 in the form of a ball and a spring which are received in a bore of the actuating shaft 36. As can be seen in Fig. 6 the spring biased plunger 14 is urged out of the bore of the actuating shaft 36 and onto a detent track 16 which is formed on an inner wall portion of the opening of the annular portion 6 of the valve control lever 4. The detent track 16 comprises, as can for example be seen in Fig. 8 a single central valley 18 with adjacent, essentially planar side regions extending from the central valley 18 to both sides thereof. This detent mechanism is acting between a component that is linked to the input actuating member 34 such that it follows its movements, namely the actuating shaft 36, and the detent track of the valve control lever 4 which is coupled to the shift actuation lever via the actuation rod 44 such that it follows its movements. It is to be understood that the detent mechanism could be arranged in many other ways according to the characterizing features of claim 1. For example in an arrangement similar to the one shown in Fig. 6, the detent mechanism could act between the actuation transfer arm 35 and the valve control lever 4, or between the input actuating member 34 and the valve control lever 4.

In the following the operation of the second embodiment during a shift operation as outlined above will be described with reference to Figs. 7 to 10. Figs. 7 to 10 show a cross-sectional view wherein the cross-section is taken at a plane perpendicular to the longitudinal axis of the shift actuation shaft 36 in Figure 6 in the area of the bore in which the spring and the detent plunger 14 of the detent mechanism are received.

Fig. 7 shows a gear shift system of the second embodiment in an initial state in which the valves 22 and the shift shaft 1 are in a neutral state. In this neutral position of the shift shaft 1 the shift actuation lever 2 is extending perpendicular to the shift shaft 1 and perpendicular to the plane of Fig. 7 below the shift shaft 1 such that the shift actuation lever is not visible in Fig. 7. Now the shift lever (not shown) is moved to initiate a shift operation and this shift lever movement is transferred via a cable or rod (not shown) connected to stud 38 (see Fig. 6) connected to one end of the input actuating member 34. A shift lever movement causes a linear displacement of the cable or rod which is translated into a pivoting movement of input actuating member 34 about the rotational longitudinal axis of shaft 36. This causes a corresponding pivotal movement of actuation transfer arm 35. Valve control lever 4, due to its connection to the actuation transfer arm 35 by the connecting pin 10, tries to follow the pivotal movement of the actuation transfer arm 35. However, the end opposite to the annular portion 6 of the valve control arm 4 is connected via the connecting rod 40 to the shift actuation lever 2. When a high torque is needed (scenario I) in order to turn the shift actuation lever, the resistance of the shift actuation lever rotates the valve control lever 4 around the rotational axis of the connection defined by the connecting pin 10. This leads to a pivotal movement of the annular portion 6 of the valve control lever 4. This situation is shown in Fig. 8 in which compared to Fig. 7 input actuating member 34 has been turned over a first range which caused the rotational movement of the valve control arm 4 around the connection defined by the connecting pin 10, whereas the shift actuation lever 2 in this initial phase remained unmoved in its initial position. Due to the connecting rod 40 also the end of the valve control lever 4 connected to the control rod remained in an unchanged position. On the other hand, the rotational movement of the valve control lever 4 caused a pivotal movement of the annular portion 6 thereof which in turn caused a displacement of the plungers of the servo control valves 22 so that one of the servo control valves into which the associated plunger has been pushed is opened, whereby the servo cylinder 20 is actuated.

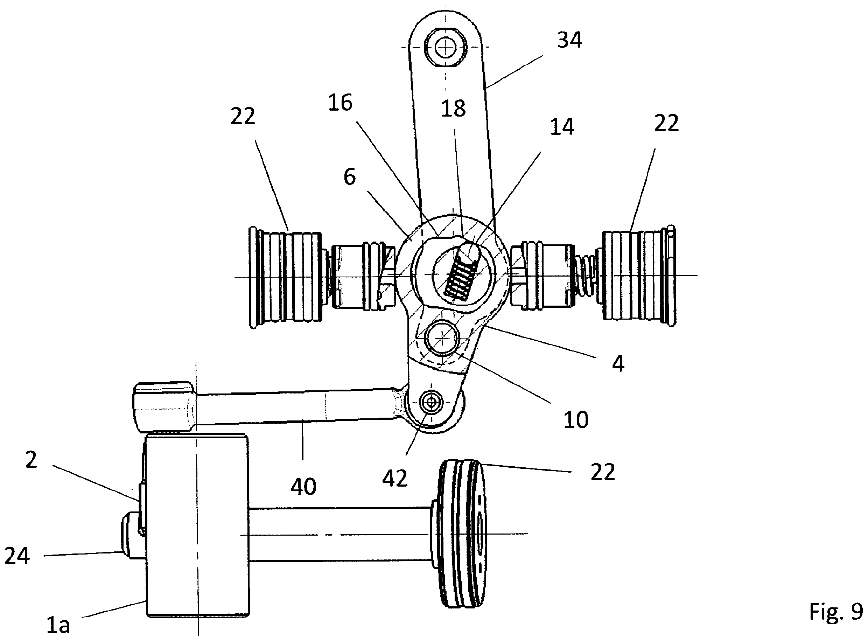

This leads to the situation shown in Fig. 9 which shows the piston rod 24 of the servo cylinder in its extended position (its front and extends now beyond shift shaft 1 and is thus visible in Fig. 9). Due to this piston rod movement the shift actuation lever 2 has been driven to be turned around the rotational axis of the shift shaft 1 to a position turned in forward direction so that part of the shift actuation lever 2 is now visible in Fig. 9.

When the shift operation is being completed by completing the turning of the shift actuation lever 2 supported by the servo cylinder, the valve control lever 4 returns to a state in which the limited play connection is in a centered state which is accompanied by the return of the detent plunger 14 to the central valley 18 of the detent track 16, as can be seen in Fig. 10. This return of the limited play connection to its centered state and thus the engagement of the detent mechanism is biased by the springs of the servo control valves 22

It will be appreciated that also in the second embodiment described in connection with Figs. 6 to 10 the engagement of the detent mechanism signals that the shift actuation lever 2 and thus the shift shaft 1 reached the shifted state dictated by the input actuating member 34, and that the engagement of the detent mechanism generates a perceptible feedback through the cable or rod connected to the input actuating member 34 to the shift lever.

Also in this embodiment the detent track 16 is shaped with a well-pointed central valley 18 adjoined on both sides by essentially planer side regions such that the detent plunger 14 is not displaced against the spring force when travelling along the essentially flat sides regions. This has the effect that a perceptible feedback feeling caused by the force of the detent mechanism is only generated when the detent plunger reaches or leaves its fully centered position with the detent plunger 14 received in the small central valley 18. This generates a sharp and precise feedback feeling in the shift lever via the cable or rod connected to stud 38 at the very point when the detent plunger reaches or leaves its fully centered position in the central valley of the detent track 16.

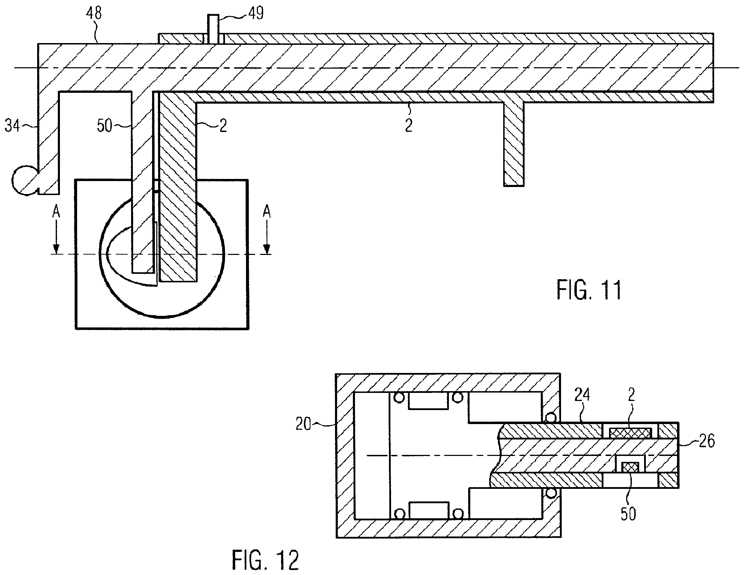

A third embodiment of the gear shift system will now be described in connection with Figs. 11 to 13. This third embodiment will be briefly described in connection with the schematical views of Figs. 11 to 13 to demonstrate that the present invention can be realized in rather different gear shift mechanisms including a limited play connection between an input actuating member and a shift actuation lever.

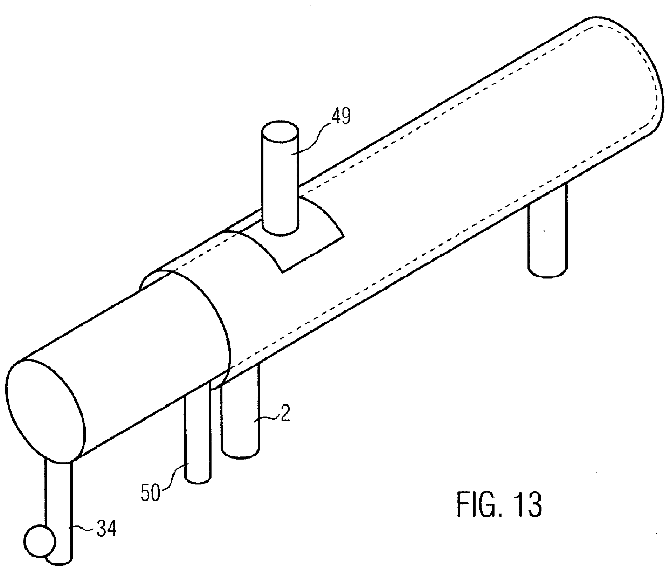

In this third embodiment the shift shaft 1 is constructed as a hollow shaft. In this hollow shift shaft 1 an actuation shaft 48 is received such that it may rotate within the hollow shift shaft 1. As can be seen in Fig. 13 the range of rotation of the actuation shaft 48 within the hollow shift shaft 1 is limited by a slit formed in the wall of the hollow shift shaft 1. A pin or projection 49 extending from the actuation shaft 48 is extending into this slot in the wall of the hollow shift shaft 1. The width of the slot limits the range of rotational movement of the actuation shaft 48 with respect to the hollow shift shaft 1.

Referring again to Fig. 11 an input actuating member 34 is connected to the actuation shaft 48 and extends perpendicular therefrom. The input actuating member 34 carries a stud at its outer end spaced apart from the actuation shaft 48, wherein the stud is arranged such that a cable or rod (not shown) connected to a gear shift lever may be connected to it.

A servo control lever 50 extends perpendicular from the actuation shaft 48. Similarly a shift actuation lever 2 extends perpendicularly from the hollow shift shaft 1.

Fig. 12 shows a cross-section through the servo cylinder 20 at the plane A-A. Please note that the piston and piston rod longitudinal axis (horizontal in Fig. 12) extends perpendicular to the Figure plane of Fig. 11. The servo cylinder 20 has a piston rod 24 extending therefrom which is arranged as a hollow shaft in which a control rod 26 is slidably received therein. As is schematically indicated in Fig. 12 the shift actuation lever 2 is received in a recess of the piston rod 24 such that the piston rod 24 may transfer force to the shift actuation lever 2 when the servo cylinder is actuated.

The servo control lever 50 connected to the actuation shaft 48 is extending through a slit in the hollow piston rod 24 and further into a recess in the control rod 26 so that shift control lever 50 may transfer force to the servo control rod 26. The slit in the hollow piston rod 24 is long enough to allow to turn the servo control lever 50 to thereby shift the servo control rod 26 to initiate servo operation by inward movement of the servo control rod 26 into the servo cylinder while the hollow piston rod 24 is still unmoved.

With reference to Figs. 11 to 13 the operation of this gear shift system is as following. By a gear shift lever movement and a corresponding displacement of a cable or rod connected to the stud carried by the input actuating member 34, this input actuating member 34 is turned, thereby turning actuation shaft 48 within the hollow shift shaft 2 which in this initial state is still stationary. The rotational movement of the actuation shaft 48 with respect to the hollow shift shaft 1 is made possible by the limited play connection between the actuation shaft 48 with its pin 49 and the hollow shift shaft 1 with its slot as shown in Fig. 13. In this initial actuation phase the actuation shaft 48 is rotated in the limited play range which is accompanied by a pivoting movement of the servo control lever 50. This pivoting movement of the servo control lever 50 is transmitted to servo control rod 26 which is in turn slidably displaced within the hollow piston rod 24, which displacement of the servo control rod 26 actuates the servo cylinder via valve plungers (not shown), which servo cylinder then, by moving the hollow piston rod 24, turns the shift actuation lever 2 linked to the hollow piston rod 24. This turning movement of the shift actuation lever 2 brings the hollow shift shaft 1 to the desired rotated shift state. There is a biasing mechanism (not shown) which brings the actuation shaft 48 and the hollow shift shaft 2 after operation of the servo cylinder to a centered position of their limited play connection.

In such an arrangement there are various possibilities to arrange a detent mechanism that bridges the limited play connection in the manner defined by their characterizing features of claim 1. The detent mechanism could for example act between the servo control lever 50 and the servo actuation lever 2. Alternatively a detent mechanism could act between the input actuating member 34 and the hollow shift shaft 1 which is a component that is linked to the shift actuation lever 2 such that it follows its movements. Furthermore, the detent mechanism could act between the actuation shaft 48, which is component that is linked to the input actuating member 34 such that it follows its movements, and the hollow shift shaft 1, which is a component that is linked to the shift actuation lever 2 such that it follows its movements.

## Claims

1. A gear shift system comprising:
a gearbox having a shift shaft (1) to which a shift actuation lever (2) is connected,
a shift lever remote from the gearbox,
a transmission mechanism for transferring shift commands from the shift lever to the shift shaft including a cable or rod connected with one of its ends to the shift lever and with its other end to a linkage comprising at least two actuating members including an input actuating member (4; 34) which is moved in response to shift lever movements transmitted by the cable or rod, and the shift actuation lever, wherein between input actuating member (4; 34) and shift actuation lever (2) there is a connection with limited play which allows a limited shift in the relative positioning of the input actuating member and the shift actuation lever,
a servo mechanism (20) connected to the shift shaft to assist in turning the shift shaft,
a servo valve arrangement (22) for controlling the servo mechanism responsive to the relative positioning between the position of the input actuating member (4; 34) and position of the shift actuation lever (2) dictated by the input actuating member,
a detent mechanism including a spring biased detent plunger (14) and a detent track (16) for providing a perceptible feedback of a shift operation to the shift lever,
**characterized in that** the detent mechanism is acting between (i) the input actuating member (4; 34) or a component that is linked to the input actuating member such that it follows its movements, and (ii) the shift actuation lever (2) or a component that is linked to the shift actuation lever such that it follows its turning movements, so that the detent plunger (14) reaching a central valley (18) of the detent track (16) indicates that the shift shaft (1) has reached its neutral or in-gear position as dictated by the input actuating member (4; 34).

2. The gear shift system according to claim 1, **characterized in that** the components of the transmission mechanism including the detent mechanism and the remaining components up to the component to be connected to the shift shaft are movably disposed in a housing which is to be connected to gearbox housing such that the positioning of said components may be adapted to the rotational positioning of the shift shaft while keeping the detent mechanism in its centered position with the detent plunger disposed in the central valley of the detent track.

3. The gear shift system according to claim 1 or 2, **characterized in that** the inactivated state of the servo valve arrangement is the identical for a plurality of positions of the input lever (4) and the shift actuation lever (2) when the detent plunger is in the central valley of the detent track.

4. The gear shift system according to any preceding claim, **characterized in that** the detent track (16) consists of a single central valley (18) surrounded by side regions of lower curvature than the central valley on both sides.

5. The gear shift system according to claim 4, **characterized in that** the central valley (18) of the detent track (16) is of complementary shape to the tip of the detent plunger (14) so that the tip of the detent plunger is received in the central valley (18) without play.

6. The gear shift system according to claim 4 or 5, **characterized in that** the side regions of the detent track (16) are shaped with such low curvature that the spring biased detent plunger (14) does not move against the spring bias when the detent plunger (14) is moved along the side regions of the detent track (16), or moves substantially less than upon leaving or entering the central valley of the detent track.

7. The gear shift system according to any of the claims 4 to 6, **characterized in that** the transmission mechanism, the detent mechanism and the servo valve arrangement are arranged such that a valve in the servo valve arrangement starts to be opened when the detent plunger (14) leaves the central valley (18) of the detent track (16) and starts to reach the fully opened state when the detent plunger is moving along one of the side regions of the detent track (16).

8. The gear shift system according to any of the claims 4 to 7, **characterized in that** the detent mechanism is arranged such that a movement of the servo valve arrangement is translated into a corresponding relative movement of the detent plunger with respect to the detent track with a transmission ratio in the range between 1,25 and 2.

9. The gear shift system according to any preceding claim, **characterized in that** the servo mechanism includes a valve control lever (4) as a part of the transmission mechanism, and two opposing servo valves (22), wherein the valve control lever has an annular portion (6) with an opening in which a shaft (1; 36) is received with limited play allowing displacement of the annular portion with respect to the shaft, wherein the valve actuation lever (4) is rotatably connected to the shift actuation lever (2) or a component that is linked to the shift actuation lever such that it follows its turning movements or to the input actuating member or a component that is linked to the input actuating member such that it follows its movements, wherein this connections defines an axis of rotation parallel to but displaced from the longitudinal axis of the shaft (1; 36) such that rotations of the valve control lever (4) caused by the transmission mechanism cause displacements of its annular portion (6), wherein two opposing servo valves (22) abut against opposite surface portions of the annular portion (6) of the valve control lever (4) with spring biased plungers such that a displacement of its annular portion (6) due to a rotational movement of the valve control lever causes displacement of the plungers of the servo valves (22) to actuate the servo mechanism (20).

10. The gear shift system according to claim 9, **characterized in that** the input actuation member is the valve control lever (4) to which, at a distance to its axis of rotation with respect to the shift actuation lever (2) or the component that is linked to the shift actuation lever such that it follows its turning movements, a component of the transmission mechanism is connected that is capable of transferring force from the shift lever to the valve control lever (4) to turn it.

11. The gear shift system of claim 10, **characterized in that** the valve control lever (4) is rotatably connected to the shift actuation lever (2) at a distance to its annular portion (6) such the rotation of the valve control lever (4) caused by the transmission mechanism causes displacement of its annular portion (6) to actuate the servo mechanism via the servo valves (22).

12. The gear shift system according to claim 9, **characterized in that** the input actuation member (34) is an input actuation lever connected to an actuation shaft (36) rotatable around its longitudinal axis, which is disposed perpendicular to the shift shaft (2) and **in that** a further actuation transfer arm (35) is connected to the actuation shaft (36), wherein this actuation shaft (36) is the shaft which extends through the opening of the annular portion (6) of the valve control lever (4), and **in that** the valve control lever (4) is rotatably connected to the actuation transfer arm (35) at a distance from the longitudinal axis of the actuation shaft (36), and **in that** an end portion of the valve control lever (4) opposite to the annular portion (6) is coupled to the shift actuation lever (2) such that the valve control lever (4) follows the movement of the shift actuation lever (2).

13. The gear shift system according to claim 12, **characterized in that** the detent mechanism is acting between the valve control lever (4) and the actuation shaft (36).

14. The gear shift system according to claim 12 or 13, **characterized in that** the axis of rotation of the rotatable connection of the valve control arm (4) to the actuation transfer arm (35) is parallel to but displaced from the rotational axis of the actuation shaft (36).

## Patentansprüche

1. Gangschaltung mit:
einem Getriebe mit einer Schaltwelle (1), mit der ein Schaltaktuatorhebel (2) verbunden ist,
einem von dem Getriebe entfernten Schalthebel,
einem Übertragungsmechanismus zum Übertragen von Schaltbefehlen von dem Schalthebel auf die Schaltwelle einschließlich eines Seilzugs oder eines Stabes, der mit einem seiner Enden mit dem Schalthebel und mit seinem anderen Ende mit einem Übertragungsgestänge verbunden ist, das wenigstens zwei Aktuatorteile einschließlich eines Eingangsaktuatorteils (4; 34), das in Reaktion auf Schalthebelbewegungen, die durch das Seilzug oder den Stab übertragen werden, bewegt wird, und des Schaltaktuatorhebels, wobei zwischen dem Eingangsaktuatorteil (4; 34) und dem Schaltaktuatorhebel (2) eine Verbindung mit begrenztem Spiel besteht, die eine begrenzte Verschiebung in der relativen Positionierung von Eingangsaktuatorteil und dem Schaltaktuatorhebel erlaubt,
einem Servomechanismus (20), der mit der Schaltwelle verbunden ist, um die Drehung der Schaltwelle zu unterstützen,
einer Servoventilanordnung (22) zur Steuerung des Servomechanismus in Reaktion auf die relative Positionierung zwischen der Position des Eingangsaktuatorteils (4; 34) und der Position des Schaltaktuatorhebels (2), die durch das Eingangsaktuatorteil diktiert ist,
einem Rastmechanismus einschließlich eines federbelasteten Raststößels (14) und einer Raststrecke (16), um eine fühlbare Rückkopplung einer Schaltoperation an dem Schalthebel zu liefern,
**dadurch gekennzeichnet, dass** der Rastmechanismus zwischen (1) dem Eingangsaktuatorteil (4; 34) oder eine Komponente, die an das Eingangsaktuatorteil so gekoppelt ist, dass es seinen Bewegungen folgt, und (ii) dem Schaltaktuatorhebel (2) oder einer Komponente wirkt, die mit dem Schaltaktuatorhebel so gekoppelt ist, dass sie seinen Drehbewegungen folgt, so dass das Erreichen einer zentralen Vertiefung (18) der Raststrecke (16) durch den Raststößel (14) anzeigt, dass die Schaltwelle (1) ihre neutrale Position oder in einen Gang geschaltete Position erreicht hat, wie es durch das Eingangsaktuatorteil (4; 34) vorgegeben ist.

2. Gangschaltsystem nach Anspruch 1, **dadurch gekennzeichnet, dass** die Komponenten des Übertragungsmechanismus einschließlich des Rastmechanismus und der übrigen Komponenten bis zu der Komponente, die mit der Schaltwelle zu verbinden ist, beweglich in einem Gehäuse angeordnet sind, das an einem Getriebegehäuse anbringbar ist, so dass die Positionierung der Komponenten der Drehpositionierung der Schaltwelle angepasst werden kann, während der Rastmechanismus in seiner zentrierten Stellung mit dem Raststößel in der zentralen Vertiefung der Raststrecke liegend gehalten werden kann.

3. Gangschaltsystem nach Anspruch 1 oder 2, **dadurch gekennzeichnet, dass** der inaktivierte Zustand der Servoventilanordnung für eine Mehrzahl von Positionen des Eingangshebels (4) und des Schaltaktuatorhebels (2) identisch ist, wenn der Raststößel sich in der zentralen Vertiefung der Raststrecke befindet.

4. Gangschaltsystem nach einem vorhergehenden Anspruch, **dadurch gekennzeichnet, dass** die Raststrecke (16) aus einer einzelnen zentralen Vertiefung (18) besteht, die auf beiden Seiten von Seitenbereichen mit geringerer Krümmung als die zentrale Vertiefung umgeben ist.

5. Gangschaltsystem nach Anspruch 4, **dadurch gekennzeichnet, dass** die zentrale Vertiefung (18) der Raststrecke (16) eine komplementäre Form zu dem Spitzenbereich des Raststößels (14) hat, so dass der Spitzenbereich des Raststößels ohne Spiel in der zentrale Vertiefung (18) aufgenommen wird.

6. Gangschaltsystem nach Anspruch 4 oder 5, **dadurch gekennzeichnet, dass** die Seitenbereiche der Raststrecke (16) mit einer so geringen Krümmung geformt sind, dass der federbelastete Raststößel (14) sich nicht gegen die Federvorspannung bewegt, wenn der Raststößel (14) entlang der Seitenbereiche der Raststrecke (16) bewegt, oder sich wesentlich weniger bewegt als beim Verlassen der oder Eintreten in die zentrale Vertiefung der Raststrecke.

7. Gangschaltsystem nach einem der Ansprüche 4 bis 6, **dadurch gekennzeichnet, dass** der Übertragungsmechanismus, der Rastmechanismus und die Servoventilanordnung so ausgestaltet sind, dass ein Ventil in der Servoventilanordnung beginnt, geöffnet zu werden, wenn der Raststößel (14) die zentrale Vertiefung (18) der Raststrecke (16) verlässt, und beginnt, den vollständig geöffneten Zustand zu erreichen, wenn der Raststößel sich entlang einer der Seitenbereiche der Raststrecke (16) bewegt.

8. Gangschaltsystem nach einem der Ansprüche 4 bis 7, **dadurch gekennzeichnet, dass** der Rastmechanismus so ausgestaltet ist, dass eine Bewegung des Servoventilaufbaus in eine entsprechende relative Bewegung das Raststößels in Bezug auf die Raststrecke übertragen wird, wobei das Übersetzungsverhältnis im Bereich zwischen 1,25 und 2 liegt.

9. Gangschaltsystem nach einem vorhergehenden Anspruch, **dadurch gekennzeichnet, dass** der Servomechanismus einen Ventilsteuerhebel (4) als ein Teil des Übertragungsmechanismus und zwei gegenüberliegende Servoventile (22) aufweist, wobei der Ventilsteuerhebel einen Ringbereich (6) mit einer Öffnung hat, in der eine Welle (1; 36) mit gegrenztem Spiel aufgenommen ist, um eine Verschiebung des Ringbereichs in Bezug auf die Welle zu ermöglichen, wobei der Ventilsteuerhebel (4) drehbar mit dem Schaltaktuatorhebel (2) oder einer Komponente verbunden ist, die mit dem Schaltaktuatorhebel so gekoppelt ist, dass sie seinen Schwenkbewegungen folgt, oder mit dem Eingangsaktuatorteil oder einer Komponente verbunden ist, die mit dem Eingangsaktuatorteil so verbunden ist, dass sie seinen Bewegungen folgt, wobei diese Verbindung eine Drehachse parallel zu, aber versetzt gegenüber der Längsachse der Welle (1; 36) definiert, so dass Drehungen des Ventilsteuerhebels (4), die durch den Übertragungsmechanismus bewirkt werden, Verschiebungen seines Ringbereichs (6) bewirken, wobei zwei gegenüberliegende Servoventile (22) an gegenüberliegenden Oberflächenbereichen des Ringbereichs (6) des Ventilsteuerhebels (4) mit federbelasteten Kolben anliegen, so dass eine Verschiebung seines Ringbereichs (6) aufgrund einer Drehbewegung des Ventilsteuerhebels eine Verschiebung der Kolben der Servoventile (22) bewirkt, um den Servomechanismus (20) zu betätigen.

10. Gangschaltsystem nach Anspruch 9, **dadurch gekennzeichnet, dass** das Eingangsaktuatorteil der Ventilsteuerhebel (4) ist, mit dem, auf Abstand zu seiner Drehachse in Bezug auf den Schaltaktuatorhebel (2) oder der Komponente, die mit dem Schaltaktuatorhebel so gekoppelt ist, dass sie seinen Schwenkbewegungen folgt, eine Komponente des Übertragungsmechanismus verbunden ist, die dazu in der Lage ist Kraft von dem Schalthebel auf den Ventilsteuerhebel (4) zu übertragen, um ihn zu schwenken.

11. Gangschaltsystem nach Anspruch 10, **dadurch gekennzeichnet, dass** der Ventilsteuerhebel (4) drehbar mit dem Schaltaktuatorhebel (2) in einem Abstand zu seinem Ringbereich (6) verbunden ist, so dass die Drehung des Ventilsteuerhebels (4), die durch den Übertragungmechanismus verursacht wird, eine Verschiebung seines Ringbereichs (6) bewirkt, um den Servomechanismus über die Servoventile (22) zu betätigen.

12. Gangschaltsystem nach Anspruch 9, **dadurch gekennzeichnet, dass** das Eingangsaktuatorteil (34) ein Eingangsaktuatorhebel ist, der mit einer Aktuatorwelle (36) verbunden ist, die drehbar um ihre Längsachse ist, die senkrecht zu der Schaltwelle (2) angeordnet ist, und dass ein weiterer Aktuatorübertragungsarm (35) mit der Aktuatorwelle (36) verbunden ist, wobei diese Aktuatorwelle (36) die Welle ist, die durch die Öffnung des Ringebereichs (6) des Ventilsteuerhebels (4) verläuft, und dass der Ventilsteuerhebel (4) drehbar mit dem Aktuatorübertragungsarm (35) auf Abstand zu der Längsachse der Aktuatorwelle (36) verbunden ist, und dass ein dem Ringbereich (6) gegenüberliegender Endbereich des Ventilsteuerhebels (4) mit dem Schaltaktuatorhebel (2) gekoppelt ist, so dass der Ventilsteuerhebel (4) der Bewegung des Schaltaktuatorhebels (2) folgt.

13. Gangschaltsystem nach Anspruch 12, **dadurch gekennzeichnet, dass** der Rastmechanismus zwischen dem Ventilsteuerarm (4) und der Aktuatorwelle (36) wirkt.

14. Gangschaltsystem nach Anspruch 12 oder 13, **dadurch gekennzeichnet, dass** die Drehachse der drehbaren Verbindung von dem Ventilsteuerarm (4) mit dem Aktuatorübertragungsarm (35) parallel zu, aber versetzt gegenüber der Drehachse der Aktuatorwelle (36) ist.

## Revendications

1. Système de changement de vitesse, comprenant :
une boîte de vitesses possédant un arbre de changement de vitesse (1) auquel un levier d'actionnement de changement de vitesse (2) est raccordé,
un levier de changement de vitesse éloigné de la boîte de vitesses,
un mécanisme de transmission pour transférer des instructions de changement de vitesse du levier de changement de vitesse à l'arbre de changement de vitesse incluant un câble ou une tige raccordée, avec une de ses extrémités, au levier de changement de vitesse et, avec son autre extrémité, à une tringlerie comprenant au moins deux éléments d'actionnement incluant un élément d'actionnement d'entrée (4 ; 34) qui est déplacé en réponse à des mouvements de levier de changement de vitesse transmis par le câble ou la tige, et le levier d'actionnement de changement de vitesse, dans lequel entre l'élément d'actionnement d'entrée (4 ; 34) et le levier d'actionnement de changement de vitesse (2) est un raccord avec jeu limité qui permet un changement limité du positionnement relatif de l'élément d'actionnement d'entrée et le levier d'actionnement de changement de vitesse,
un servomécanisme (20) raccordé à l'arbre de changement de vitesse pour aider à tourner l'arbre de changement de vitesse,
un agencement de servovalve (22) pour commander le servomécanisme en réponse au positionnement relatif entre la position de l'élément d'actionnement d'entrée (4 ; 34) et la position du levier d'actionnement de changement de vitesse (2) dictée par l'élément d'actionnement d'entrée,
un mécanisme à encliquetage incluant un piston plongeur à encliquetage sollicité par ressort (14) et un chemin à encliquetage (16) pour fournir une rétroaction perceptible d'une opération de changement de vitesse au levier de changement de vitesse,
**caractérisé en ce que** le mécanisme à encliquetage agit entre (i) l'élément d'actionnement d'entrée (4 ; 34) ou un composant qui est lié à l'élément d'actionnement d'entrée de telle sorte qu'il suive ses mouvements, et (ii) le levier d'actionnement de changement de vitesse (2) ou un composant qui est lié au levier d'actionnement de changement de vitesse de telle sorte qu'il suive ses mouvements de rotation, pour que le piston plongeur à encliquetage (14) atteignant un creux central (18) du chemin à encliquetage (16) indique que l'arbre de changement de vitesse (1) a atteint sa position neutre ou embrayée telle que dictée par l'élément d'actionnement d'entrée (4 ; 34).

2. Système de changement de vitesse selon la revendication 1, **caractérisé en ce que** les composants du mécanisme de transmission incluant le mécanisme à encliquetage et les autres composants, jusqu'au composant destiné à être raccordé à l'arbre de changement de vitesse, sont disposés de façon mobile dans un logement qui est destiné à être raccordé à un logement de boîte de vitesses de telle sorte que le positionnement desdits composants puisse être adapté au positionnement de rotation de l'arbre de changement de vitesse tout en maintenant le mécanisme à encliquetage dans sa position centrée avec le piston plongeur à encliquetage disposé dans le creux central du chemin à encliquetage.

3. Système de changement de vitesse selon la revendication 1 ou 2, **caractérisé en ce que** l'état inactivé de l'agencement de servovalve est identique pour une pluralité de positions du levier d'entrée (4) et du levier d'actionnement de changement de vitesse (2) lorsque le piston plongeur à encliquetage est dans le creux central du chemin à encliquetage.

4. Système de changement de vitesse selon une quelconque revendication précédente, **caractérisé en ce que** le chemin à encliquetage (16) est constitué d'un seul creux central (18) entouré par des régions latérales de courbure inférieure à celle du creux central sur les deux côtés.

5. Système de changement de vitesse selon la revendication 4, **caractérisé en ce que** le creux central (18) du chemin à encliquetage (16) est de forme complémentaire à l'embout du piston plongeur à encliquetage (14) pour que l'embout du piston plongeur à encliquetage soit reçu dans le creux central (18) sans jeu.

6. Système de changement de vitesse selon la revendication 4 ou 5, **caractérisé en ce que** les régions latérales du chemin à encliquetage (16) sont formées avec une courbure tellement basse que le piston plongeur à encliquetage sollicité par ressort (14) ne se déplace pas contre la sollicitation de ressort lorsque le piston plongeur à encliquetage (14) est déplacé le long des régions latérales du chemin à encliquetage (16), ou se déplace sensiblement moins que lorsqu'il quitte ou entre dans le creux central du chemin à encliquetage.

7. Système de changement de vitesse selon l'une quelconque des revendications 4 à 6, **caractérisé en ce que** le mécanisme de transmission, le mécanisme à encliquetage et l'agencement de servovalve sont agencés de telle sorte qu'une valve dans l'agencement de servovalve commence à être ouverte lorsque le piston plongeur à encliquetage (14) quitte le creux central (18) du chemin à encliquetage (16) et commence à atteindre l'état complètement ouvert lorsque le piston plongeur à encliquetage se déplace le long de l'une des régions latérales du chemin à encliquetage (16).

8. Système de changement de vitesse selon l'une quelconque des revendications 4 à 7, **caractérisé en ce que** le mécanisme à encliquetage est agencé de telle sorte qu'un mouvement de l'agencement de servovalve soit transformé en un mouvement relatif correspondant du piston plongeur à encliquetage par rapport au chemin à encliquetage avec un rapport de transmission dans la plage entre 1,25 et 2.

9. Système de changement de vitesse selon une quelconque revendication précédente, **caractérisé en ce que** le servomécanisme inclut un levier de commande de valve (4) en tant que partie du mécanisme de transmission, et deux servovalves opposées (22), dans lequel le levier de commande de valve possède une portion annulaire (6) avec une ouverture dans laquelle un arbre (1 ; 36) est reçu avec un jeu limité permettant le déplacement de la portion annulaire par rapport à l'arbre, dans lequel le levier d'actionnement de valve (4) est raccordé de façon rotative au levier d'actionnement de changement de vitesse (2) ou à un composant qui est lié au levier d'actionnement de changement de vitesse de telle sorte qu'il suive ses mouvements de rotation ou à l'élément d'actionnement d'entrée ou à un composant qui est lié à l'élément d'actionnement d'entrée de telle sorte qu'il suive ses mouvements, dans lequel ce raccord définit un axe de rotation parallèle à, mais déplacé de, l'axe longitudinal de l'arbre (1 ; 36) de telle sorte que des rotations du levier de commande de valve (4) causées par le mécanisme de transmission entraînent des déplacements de sa portion annulaire (6), dans lequel deux servovalves opposées (22) prennent appui contre des portions de surface opposées de la portion annulaire (6) du levier de commande de valve (4) avec des pistons plongeurs sollicités par ressort de telle sorte qu'un déplacement de son portion annulaire (6) en raison d'un mouvement de rotation du levier de commande de valve entraîne le déplacement des pistons plongeurs des servovalves (22) pour actionner le servomécanisme (20).

10. Système de changement de vitesse selon la revendication 9, **caractérisé en ce que** l'élément d'actionnement d'entrée est le levier de commande de valve (4) auquel, à une distance de son axe de rotation par rapport au levier d'actionnement de changement de vitesse (2) ou au composant qui est lié au levier d'actionnement de changement de vitesse de telle sorte qu'il suive ses mouvements de rotation, un composant du mécanisme de transmission est raccordé qui est capable de transférer une force du levier de changement de vitesse au levier de commande de valve (4) pour le faire tourner.

11. Système de changement de vitesse selon la revendication 10, **caractérisé en ce que** le levier de commande de valve (4) est raccordé de façon rotative au levier d'actionnement de changement de vitesse (2) à une distance de sa portion annulaire (6) telle que la rotation du levier de commande de valve (4) causée par le mécanisme de transmission entraîne le déplacement de sa portion annulaire (6) pour actionner le servomécanisme par l'intermédiaire des servovalves (22).

12. Système de changement de vitesse selon la revendication 9, **caractérisé en ce que** l'élément d'actionnement d'entrée (34) est un levier d'actionnement d'entrée raccordé à un arbre d'actionnement (36) rotatif autour de son axe longitudinal, qui est disposé perpendiculairement à l'arbre de changement de vitesse (2) et **en ce qu'**un bras de transfert d'actionnement supplémentaire (35) est raccordé à l'arbre d'actionnement (36), dans lequel cet arbre d'actionnement (36) est l'arbre qui s'étend à travers l'ouverture de la portion annulaire (6) du levier de commande de valve (4), et **en ce que** le levier de commande de valve (4) est raccordé de façon rotative au bras de transfert d'actionnement (35) à une distance de l'axe longitudinal de l'arbre d'actionnement (36), et **en ce qu'**une portion d'extrémité du levier de commande de valve (4) opposée à la portion annulaire (6) est accouplée au levier d'actionnement de changement de vitesse (2) de telle sorte que le levier de commande de valve (4) suive le mouvement du levier d'actionnement de changement de vitesse (2).

13. Système de changement de vitesse selon la revendication 12, **caractérisé en ce que** le mécanisme à encliquetage agit entre le levier de commande de valve (4) et l'arbre d'actionnement (36).

14. Système de changement de vitesse selon la revendication 12 ou 13, **caractérisé en ce que** l'axe de rotation du raccord rotatif du bras de commande de valve (4) au bras de transfert d'actionnement (35) est parallèle à, mais déplacé de, l'axe de rotation de l'arbre d'actionnement (36).
